# EUROPEAN PATENT APPLICATION

(11) **EP 4 664 109 A1**
(43) Date of publication of application: **17.12.2025**
(21) Application number: 24753288.0
(22) Date of filing: 05.02.2024
(51) Int. Cl.: G01N 35/02, G01N 35/04

(54) **CONTAINER STORAGE DEVICE, CONTAINER DISPENSING METHOD, AND ANALYSIS SYSTEM**

(30) Priority: 06.02.2023 JP 2023016298
(71) Applicant: HITACHI HIGH-TECH CORPORATION, Tokyo 105-6409 (JP); Roche Diagnostics GmbH, 68305 Mannheim (DE); Roche Diagnostics International AG, 6343 Rotkreuz (CH)
(72) Inventor: MATSUDA, Yuki, Tokyo 105-6409 (JP); MATSUKA, Takeshi, Tokyo 105-6409 (JP); CHIDA, Saori, Tokyo 105-6409 (JP); SASAKI, Shunsuke, Tokyo 105-6409 (JP); JOJI, Akira, Tokyo 105-6409 (JP); WATANABE, Yutaka, Tokyo 105-6409 (JP); ALLWIN, Richard, 68305 Mannheim (DE); KLEMMER, Martina, 68305 Mannheim (DE); KLINSKI, Mirko, 68305 Mannheim (DE); DEGROOT, Peter, 6343 Rotkreuz (CH)
(74) Representative: Strehl & Partner mbB
(86) International application number: PCT/JP2024/003631
(87) International publication number: WO 2024/166845

(57) **Abstract**

To provide a container storage device that reduces a decrease in processing capacity of an automatic analyzer to be connected and a delay in a measurement result of a measurement request sample and efficiently conveys the sample. A container storage device 1 includes a buffer 21 in which a rack 23 configured to accommodate a first container 22 and a second container 22 is placed, and a control unit 101. The control unit 101 includes a reception unit 102 configured to receive conveying commands for the first container 22 and the second container 22 from an analyzer 11, is configured to confirm whether a predetermined time elapses since the reception unit 102 receives the conveying command for the first container 22, and is configured to perform control such that when the conveying command for the second container 22 is received before the predetermined time elapses, the rack 23 on which the first container 22 and the second container 22 are placed is conveyed to the analyzer 11 at a timing at which the conveying command for the second container 22 is received, and when the conveying command for the second container 22 is not received even after the predetermined time elapses, the rack 23 on which the first container 22 is placed is conveyed to the analyzer 11.

## Description

### Technical Field

The present invention relates to a container storage device, a container conveying method, and an analysis system.

### Background Art

A container storage device is a device including a sample storage unit and a sample rack conveying unit, and has a refrigeration function for a sample container holding a sample and an automatic conveyance function to an automatic analyzer. The container storage device receives measurement request information from the connected automatic analyzer, sets the sample to be measured from a sample cooling box to a conveying rack, and automatically conveys the sample to the automatic analyzer via the sample rack conveying unit.

In related art, these operations are manually performed by a user, and the user supplies the sample at an appropriate timing adjusted so as not to affect processing capacity of the automatic analyzer.

That is, even in the case of automatic conveyance instead of manual conveyance, it is necessary that the container storage device does not affect the processing capacity of the automatic analyzer.

PTL 1 describes automation of a process in which a sample is transferred from a tray storing the sample to a sample conveying line and conveyed to a processing unit or an automatic analyzer upon receiving sample taking-out instruction information through communication between a laboratory information system and an operation unit.

### Citation List

### Patent Literature

PTL 1: JP2014-48215A

### Summary of Invention

### Technical Problem

When a measurement request sample is placed on the rack and automatically conveyed using the container storage device, it is required that the processing capacity of the automatic analyzer is not reduced.

However, in the technique disclosed in PTL 1, only a method for efficiently conveying out the sample once stored is mentioned, and there is a possibility that the processing capacity of the automatic analyzer is reduced due to a method for placing the sample on the rack.

For example, when the sample is conveyed at high frequency, use efficiency of the rack decreases, congestion occurs in the automatic analyzer, and the processing capacity decreases. In addition, when the sample requested to be measured is conveyed at low frequency, obtaining a measurement result of the sample requested to be measured is significantly delayed.

PTL 1 automates transfer and conveyance of the sample, but does not consider the decrease in the processing capability of the automatic analyzer or the delay in the sample measurement result due to the frequency of sample conveyance.

An object of the invention is to solve the above problems and to provide a container storage device, a sample container conveying method, and an analysis system that reduce a decrease in processing capacity of an automatic analyzer to be connected and a delay in a measurement result of a measurement request sample and efficiently convey the sample.

### Solution to Problem

In order to achieve the above object, the invention is implemented as follows.

A container storage device that is connected to an analyzer configured to analyze a sample and that conveys a container in which a liquid is contained between the container storage device and the analyzer, the container storage device including: a buffer in which a rack configured to accommodate a first container and a second container is placed; and a control unit including a reception unit configured to receive conveying commands for the first container and the second container from the analyzer, configured to confirm whether a predetermined time elapses since the reception unit receives the conveying command for the first container, and configured to perform control such that when the conveying command for the second container is received before the predetermined time elapses, the rack on which the first container and the second container are placed is conveyed to the analyzer at a timing at which the conveying command for the second container is received, and when the conveying command for the second container is not received even after the predetermined time elapses, the rack on which the first container is placed is conveyed to the analyzer.

A container conveying method for conveying a container in which a liquid is contained to and from an analyzer configured to analyze a sample, which is connected to the analyzer, the container conveying method including: receiving a conveying command for a first container from the analyzer; confirming whether a predetermined time elapses since the conveying command for the first container is received; and conveying, when a conveying command for a second container is received before the predetermined time elapses, a rack on which the first container and the second container are placed to the analyzer at a timing at which the conveying command for the second container is received, and conveying, when the conveying command for the second container is not received even after the predetermined time elapses, the rack on which the first container is placed to the analyzer.

An analysis system including: the container storage device ; and the analyzer configured to analyze the sample.

### Advantageous Effects of Invention

According to the invention, it is possible to provide a container storage device, a sample container conveying method, and an analysis system that reduce a decrease in processing capacity of an automatic analyzer to be connected and a delay in a measurement result of a measurement request sample and efficiently convey the sample.

### Brief Description of Drawings

[FIG. 1] FIG. 1 is a configuration diagram showing an example of a container storage device connected to an analyzer.
[FIG. 2A] FIG. 2A is a plan view of a rack used in FIG. 1 and sample containers mounted thereon.
[FIG. 2B] FIG. 2B is a plan view of the rack used in FIG. 1 and the sample containers mounted thereon.
[FIG. 3] FIG. 3 is a conceptual diagram for determining a sample taking-out timing in the invention.
[FIG. 4] FIG. 4 is a flowchart showing container taking-out determination processing.
[FIG. 5] FIG. 5 is a functional block diagram of a control unit.

### Description of Embodiments

An embodiment of the invention will be described in detail with reference to the drawings.

In the following embodiment, it is needless to mention that components (also including element steps and the like) thereof are not necessarily essential unless otherwise specified or unless clearly considered to be essential in principle.

### Embodiment

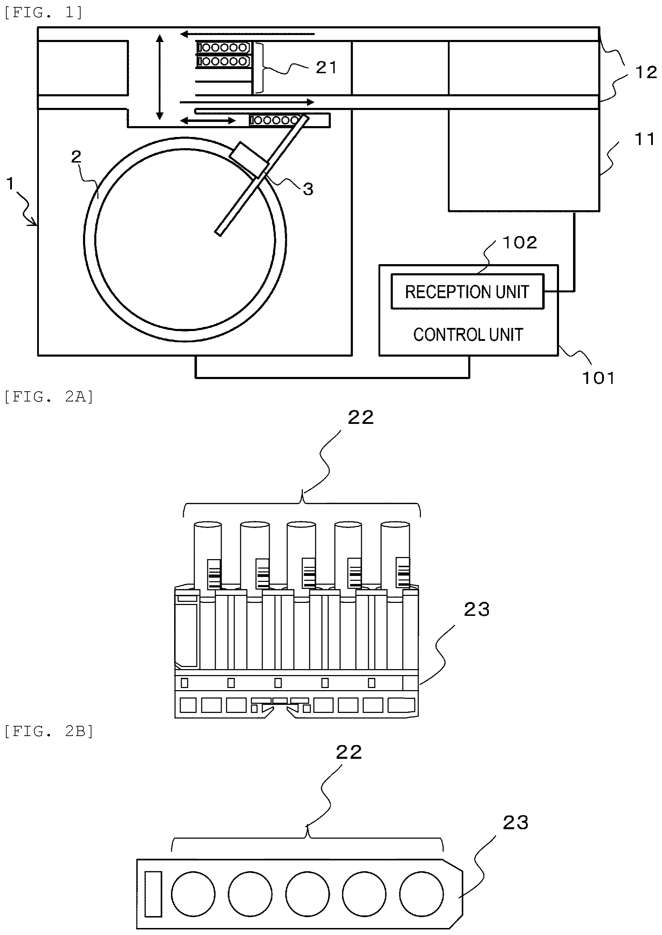

A container storage device 1 according to the embodiment of the invention will be described with reference to FIG. 1.

FIG. 1 is a plan view of the container storage device 1 connected to an analyzer 11. In FIG. 1, main components of the container storage device 1 are a cooling box 2 that can store a sample container 22 (see FIGS. 2A and 2B) containing a liquid, a transfer mechanism 3 for placing the sample container 22 between a rack 23 (see FIGS. 2A and 2B) and the cooling box 2, a buffer 21 for placing and storing the empty rack 23, a conveying line 12 for connecting to the analyzer 11, and a control unit 101 that manages an operation of the container storage device 1.

The conveying line 12 conveys the rack 23 between the buffer 21 and a position where the transfer mechanism 3 places the sample container 22.

In FIG. 1, the reception unit 102 provided in the control unit 101 receives a conveying command for the sample container 22 from the analyzer 11, and the control unit 101 can take out, from the cooling box 2, the sample container 22 for which the conveying command is received based on the received conveying command, place the sample container 22 on the empty rack 23 conveyed from the buffer 21 to a placement position (transfer line), and convey the sample container 22 to the analyzer 11 using the conveying line 12.

The container storage device 1 can convey, to a position where the transfer mechanism 3 transfers the sample container 22, the sample container 22 placed on the rack 23 conveyed from the analyzer 11 through the conveying line 12, and store, in the cooling box 2, the sample container 22 placed on the rack 23.

The position where the sample container 22 is placed may be the same as that of the buffer 21.

FIG. 2A is a side view of an example of the sample container 22 containing the liquid stored in the container storage device 1 and the rack 23 for placing and conveying the sample container 22, and FIG. 2B is a top view of the example of the sample container 22 and the rack 23.

In FIGS. 2A and 2B, the number of sample containers 22 that can be placed on one rack 23 is five, and the number of sample containers 22 that can be placed is not necessarily five, and any N sample containers 22 may be placed.

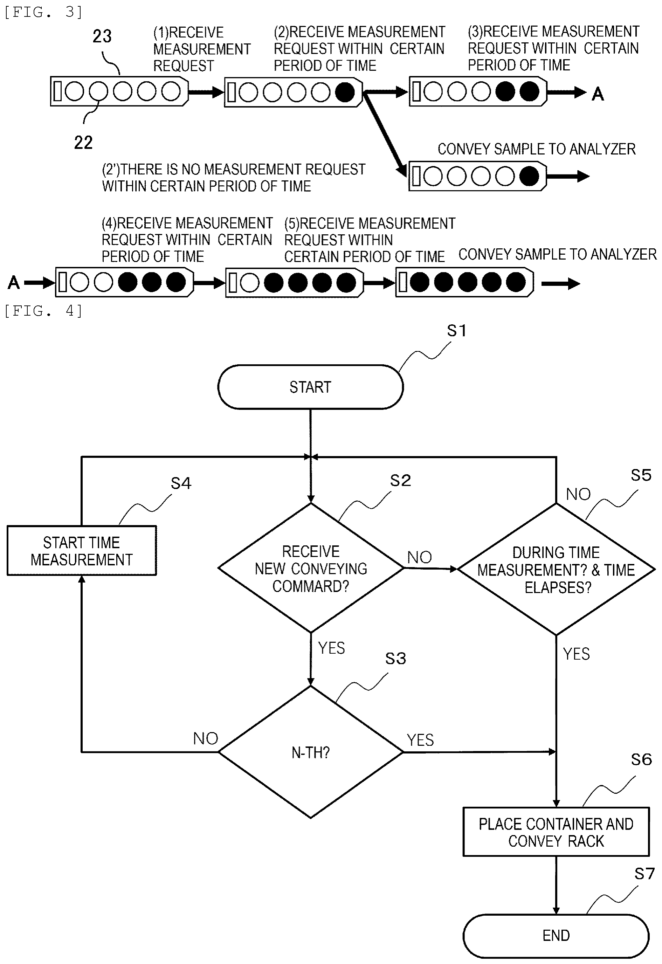

FIG. 3 is a conceptual diagram for determining a sample taking-out timing in one embodiment of the invention.

As a method for collectively conveying a plurality of sample containers 22, a method of waiting for a certain period of time (for example, one hour) and collectively processing conveying commands received by the reception unit 102 during that time is conceivable.

In one embodiment of the invention, for example, when five sample containers 22 can be placed on one rack 23, the certain period of time is divided by the number of containers that can be placed, which is five, and a certain waiting time (12 minutes in this case) is set for each conveying command.

In this way, the waiting time for placing the sample container 22 on one rack 23 can be kept equivalent, and when the number of conveying commands is small, the waiting time even when there is no conveying command can be reduced.

The example shown in FIG. 3 shows an example of a case where there is no next measurement request within a certain waiting time after a conveying command (measurement request) for a first sample container 22 is issued, and a case where there is a next measurement request within the certain waiting time after the conveying command (measurement request (a conveying request for an additional container)) for the first sample container 22 (first container) is issued, and then there are measurement requests one after another continuous within the certain waiting time such that the sample container 22 becomes a fifth one (fifth container).

If there is no next measurement request within the certain waiting time, the rack 23 is conveyed in a state where one sample container 22 (first container) is placed in one rack 23, in a state where two sample containers 22 (first container and second container) are placed in one rack 23, in a state where three sample containers 22 (first container, second container, and third container) are placed, or in a state where four sample containers 22 (first container, second container, third container, and fourth container) are placed.

FIG. 4 is a flow showing determination processing by the control unit 101 for taking out, based on the conveying command received by the reception unit 102, the sample container 22 for which the conveying command is received.

In the embodiment, a case of using a rack on which five sample containers 22 can be placed will be described.

When the flow is started (step S1), it is checked whether the reception unit 102 receives a new conveying command for the sample container 22 (step S2). When the new conveying command is received, it is checked what number the new conveying command is (step S3). When the new conveying command is a fifth one in step S3, the sample container 22 specified by the conveying command is placed on the rack 23 and conveyed to the analyzer 11 (S6).

When the new conveying command is not the fifth one in step S3, measurement of a time from a timing at which the new conveying command is received is started (step S4). When no new conveying command is received in step S2, it is checked whether time measurement is in progress and the certain period of time (for example, 12 minutes) elapses (step S5).

In step S5, when the time measurement is in progress and the certain period of time elapses, the sample container 22 specified by the conveying command is placed on the rack 23 and conveyed to the analyzer 11 (step S6). In step S5, when the time measurement is not performed or the certain period of time does not elapse, the sample container 22 is not taken out.

The certain period of time may be fixed regardless of the number of received conveying commands, or may be variable depending on the number of conveying commands. The certain period of time may also be changed according to an operation rate of the analyzer 11 that is a conveyance destination. When the operation rate is lower than a predetermined rate, the certain period of time is shortened, and a large number of samples are conveyed to the analyzer 11 in a short time. The certain period of time may also be changed by combining the number of conveying commands and the operation rate of the analyzer 11.

In this way, by making the taking-out of the sample container 22 variable, it is possible to limit the number of racks 23 conveyed to the analyzer 11, to efficiently convey the sample container 22, and to prevent a decrease in processing capacity of the analyzer 11.

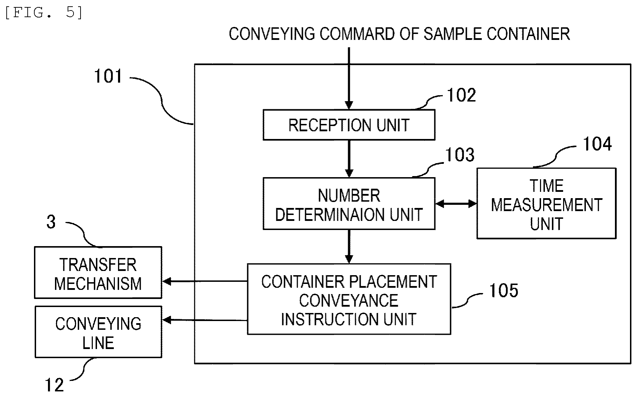

FIG. 5 is an internal functional block diagram of the control unit 101.

In FIG. 5, the control unit 101 includes the reception unit 102 that receives the conveying command for the sample container 22 from the analyzer 11, a number determination unit 103 that determines the number of sample containers 22 according to the conveying command received by the reception unit 102, a time measurement unit 104 that measures the time from the timing at which the new conveying command is received, and a container placement conveyance instruction unit 105 that instructs the transfer mechanism 3 to place the container according to an instruction from the number determination unit 103 and instructs the conveying line 12 to convey the rack 23 to the analyzer 11.

According to the invention, it is possible to provide the container storage device 1, a sample container conveying method, and an analysis system (including the container storage device 1 and the analyzer 11) that reduce a decrease in processing capacity of an automatic analyzer to be connected and a delay in a measurement result of a measurement request sample and efficiently convey the sample.

In the above embodiment, the sample container 22 is an example of the container, but the container is not limited to the sample container 22 and may be a reagent container. Thus, the sample container 22 contains the sample as the liquid, whereas the reagent container contains a reagent as the liquid.

The number of sample containers 22 that can be stored on the rack 23 is not limited to the example described above, and other numbers of sample containers 22 can be stored.

That is, the rack 23 can store N (N is an integer equal to or greater than 1) sample containers 22, and when the reception unit 102 does not receive a conveying command for an X-th (X is an integer equal to or greater than 2 and equal to or less than N) sample container 22 even after the certain period of time elapses since the reception unit 102 receives a conveying command for an (X-1)-th sample container 22, the control unit 101 conveys the rack 23 on which the sample containers 22 up to the (X-1)-th sample container 22 are placed to the analyzer 11 without placing the X-th sample container 22 on the rack 23. In this case, the container is still not limited to the sample container 22 and may be a reagent container.

### Reference Signs List

1: container storage device
2: cooling box
3: transfer mechanism
11: analyzer
12: conveying line
21: buffer
22: sample container
23: rack
101: control unit
102: reception unit
103: number determination unit
104: time measurement unit
105: container taking-out and conveyance instruction unit

## Claims

1. A container storage device that is connected to an analyzer configured to analyze a sample and that conveys a container in which a liquid is contained between the container storage device and the analyzer, the container storage device comprising:
a buffer in which a rack configured to accommodate a first container and a second container is placed; and
a control unit
including a reception unit configured to receive conveying commands for the first container and the second container from the analyzer,
configured to confirm whether a predetermined time elapses since the reception unit receives the conveying command for the first container, and
configured to perform control such that when the conveying command for the second container is received before the predetermined time elapses, the rack on which the first container and the second container are placed is conveyed to the analyzer at a timing at which the conveying command for the second container is received, and when the conveying command for the second container is not received even after the predetermined time elapses, the rack on which the first container is placed is conveyed to the analyzer.

2. The container storage device according to claim 1, wherein
the rack is further capable of accommodating a third container, and
the control unit is configured such that,
when the reception unit does not receive the conveying command for the second container even after the predetermined time elapses since the reception unit receives the conveying command for the first container, the rack on which the first container is placed is conveyed to the analyzer without placing the second container on the rack, and
when the reception unit receives the conveying command for the second container before the predetermined time elapses since the reception unit receives the conveying command for the first container, and does not receive a conveying command for the third container even after the predetermined time elapses since the reception unit receives the conveying command for the second container, the rack on which the first container and the second container are placed is conveyed to the analyzer without placing the third container on the rack.

3. The container storage device according to claim 1, wherein
the rack is capable of accommodating N (N is an integer equal to or greater than 1) containers, and
the control unit is configured such that,
when the reception unit does not receive a conveying command for an X-th (X is an integer equal to or greater than 2 and equal to or less than N) container even after the predetermined time elapses since the reception unit receives a conveying command for an (X-1)-th container, the rack on which the containers up to the (X-1)-th container are placed is conveyed to the analyzer without placing the X-th container on the rack.

4. The container storage device according to claim 1, further comprising:
a cooling box configured to store the container in which the liquid is contained;
a transfer mechanism configured to place the container on the rack; and
a conveying line through which the rack is conveyed between the buffer and a position where the transfer mechanism places the container.

5. The container storage device according to claim 1, wherein
the predetermined time is changed according to an operation rate of the analyzer.

6. The container storage device according to claim 4, wherein
the control unit includes
the reception unit,
a number determination unit configured to determine the number of the containers according to the conveying command received by the reception unit,
a time measurement unit configured to measure a time from a timing at which the conveying command is received, and
a container placement conveyance instruction unit configured to instruct the transfer mechanism to place the container according to an instruction from the number determination unit and instruct the conveying line to convey the rack to the analyzer.

7. A container conveying method for conveying a container in which a liquid is contained to and from an analyzer configured to analyze a sample, which is connected to the analyzer, the container conveying method comprising:
receiving a conveying command for a first container from the analyzer;
confirming whether a predetermined time elapses since the conveying command for the first container is received; and
conveying, when a conveying command for a second container is received before the predetermined time elapses, a rack on which the first container and the second container are placed to the analyzer at a timing at which the conveying command for the second container is received, and conveying, when the conveying command for the second container is not received even after the predetermined time elapses, the rack on which the first container is placed to the analyzer.

8. The container conveying method according to claim 7, wherein
the rack is further capable of accommodating a third container, and
when the conveying command for the second container is not received even after the predetermined time elapses since the conveying command for the first container is received, the rack on which the first container is placed is conveyed to the analyzer without placing the second container on the rack, and
when the conveying command for the second container is received before the predetermined time elapses since the conveying command for the first container is received, and a conveying command for the third container is not received even after the predetermined time elapses since the conveying command for the second container is received, the rack on which the first container and the second container are placed is conveyed to the analyzer without placing the third container on the rack.

9. The container conveying method according to claim 7, wherein
the rack is capable of accommodating N (N is an integer equal to or greater than 1) containers, and
when a conveying command for an X-th (X is an integer equal to or greater than 2 and equal to or less than N) container is not received even after the predetermined time elapses since a conveying command for an (X-1)-th container is received, the rack on which the containers up to the (X-1)-th container are placed is conveyed to the analyzer without placing the X-th container on the rack.

10. The container conveying method according to claim 7, wherein
the predetermined time is changed according to an operation rate of the analyzer.

11. An analysis system comprising:
the container storage device according to claim 1 or 3; and
the analyzer configured to analyze the sample.
